# EUROPEAN PATENT APPLICATION

(11) **EP 3 511 622 A1**
(43) Date of publication of application: **17.07.2019**
(21) Application number: 18212952.8
(22) Date of filing: 17.12.2018
(51) Int. Cl.: F23R 3/00, F23R 3/50, F23R 3/60, F01D 9/02, F01D 11/00, F01D 25/24, F02C 7/28

(54) **A COMBUSTION CHAMBER ARRANGEMENT**

(30) Priority: 16.01.2018 GB 201800674
(71) Applicant: Rolls-Royce plc, London SW1E 6AT (GB)
(72) Inventor: Mulcaire, Thomas, Derby, Derbyshire DE24 8BJ (GB)
(74) Representative: Rolls-Royce plc

(57) **Abstract**

A combustion chamber arrangement comprises an outer casing (60) surrounding an annular combustion chamber (15), the combustion chamber (15) surrounding an inner casing (62) and a stage of combustion chamber outlet guide vanes (66) arranged at the downstream end of the combustion chamber (25). The stage of outlet guide vanes (66) interconnects the outer casing (60) and the inner casing (62). The combustion chamber (15) comprises a radially inner annular wall structure (40). A sealing ring (68) is mounted on the inner casing (62) which is configured to allow relative radial movement but to restrict relative axial and circumferential movement between the sealing ring (68) and the inner casing (60). A first seal (72) allows relative axial movement between the sealing ring (68) and the downstream end of the radially inner wall (40) of the combustion chamber (15). A second seal (74) allows relative axial movement between the sealing ring (68) and the stage of outlet guide vanes (66).

## Description

The present disclosure relates to a combustion chamber arrangement and in particular to a gas turbine engine combustion chamber arrangement.

A known combustion chamber arrangement comprises an annular combustion chamber, an inner casing, an outer casing and a stage of combustion chamber outlet guide vanes. The outer casing surrounds the annular combustion chamber and the annular combustion chamber surrounds the inner casing. The stage of combustion chamber outlet guide vanes is arranged at the downstream end of the annular combustion chamber and the stage of combustion chamber outlet guide vanes interconnects the outer casing and the inner casing. The annular combustion chamber comprises an annular upstream end wall structure, a radially inner annular wall structure secured to the annular upstream end wall structure and a radially outer annular wall structure secured to the annular upstream end wall structure. A sealing ring is mounted on the inner casing by a mounting arrangement, the mounting arrangement is configured to allow relative radial and axial movement between the sealing ring and the inner casing and the mounting arrangement is configured to restrict relative circumferential movement between the sealing ring and the inner casing. The downstream end of the radially inner annular wall structure has an annular axially extending lip which locates in an annular slot in the upstream end of the sealing ring to allow relative axial movement between the sealing ring and the annular combustion chamber. The upstream end of the stage of combustion chamber outlet guide vanes has radially inwardly extending tangs which locate in a radial slot in the downstream end of the sealing ring to allow relative radial movement between the sealing ring and the stage of combustion chamber outlet guide vanes.

However, this combustion chamber arrangement has a problem in that the radially outer end of the stage of combustion chamber outlet guide vanes is prevented from moving in a downstream direction by the outer casing, but the radially inner end of the stage of combustion chamber outlet guide vanes is constrained by the inner casing which may move axially and thus the stage of combustion chamber outlet guide vanes is able to "roll" when large gas loads are imposed on both the stage of combustion chamber outlet guide vanes and the downstream end of casing structure as well as thermal expansion of the inner casing. The "rolling" of the stage of combustion chamber outlet guide vanes may induce stresses in the sealing ring which may reduce the working life time of the sealing ring and also deform the sealing ring in the region of the annular slot and/or cause wear or stress at the interface with the radially inner annular wall structure of the annular combustion chamber. Furthermore, the tangs of the stage of combustion chamber outlet guide vanes do not have a uniform thickness due to manufacturing tolerances and thus air may leak around the tangs into the annular combustion chamber, reducing performance and cooling effectiveness. The sealing ring is also exposed to hot gases and may suffer from degradation and cracking in service.

The present disclosure seeks to produce a combustion chamber arrangement which reduces, or overcomes, the above mentioned problem.

According to a first aspect of the invention there is provided a combustion chamber arrangement comprising an annular combustion chamber, an inner casing, an outer casing and a stage of combustion chamber outlet guide vanes,
the outer casing surrounding the annular combustion chamber, the annular combustion chamber surrounding the inner casing, the stage of combustion chamber outlet guide vanes being arranged at the downstream end of the annular combustion chamber, the stage of combustion chamber outlet guide vanes interconnecting the outer casing and the inner casing,
the annular combustion chamber comprising an annular upstream end wall structure, a radially inner annular wall structure secured to the annular upstream end wall structure and a radially outer annular wall structure secured to the annular upstream end wall structure,
a sealing ring being mounted on the inner casing by a mounting arrangement, the mounting arrangement being configured to allow relative radial movement between the sealing ring and the inner casing and the mounting arrangement being configured to restrict relative axial and circumferential movement between the sealing ring and the inner casing,
the downstream end of the radially inner annular wall structure forming a first seal with the sealing ring, the first seal being arranged to allow relative axial movement between the sealing ring and the annular combustion chamber, and
a second seal being arranged between the sealing ring and the radially inner end of the stage of combustion chamber outlet guide vanes, the second seal being arranged to allow relative axial movement between the sealing ring and the stage of combustion chamber outlet guide vanes.

The downstream end of the radially inner annular wall structure may have an axially extending flange, the sealing ring may have an axially extending slot and the axially extending flange of the radially inner annular wall structure locating in the axially extending slot of the sealing ring.

The axially extending flange may be annular and the axially extending slot may be annular.

The downstream end of the radially inner annular wall structure may have an axially extending slot, the sealing ring may have an axially extending flange and the axially extending flange of the sealing ring locating in the axially extending slot of the radially inner annular wall structure.

The second seal may comprise a flapper seal. The second seal may comprise a labyrinth seal. The second seal may comprise a w shaped seal. The second seal may comprise a C shaped seal. The second seal may comprise a labyrinth seal and a flapper seal.

The flapper seal may be secured to the stage of combustion chamber outlet guide vanes. The flapper seal may be secured to the sealing ring.

The mounting arrangement may comprise a plurality of circumferentially spaced radially inwardly extending projections on the sealing ring and a plurality of circumferentially spaced sockets on the inner casing, each projection on the sealing ring engaging a respective one of the sockets on the inner casing.

The mounting arrangement may comprise a plurality of circumferentially spaced radially outwardly extending projections on the inner casing and a plurality of circumferentially spaced sockets on the sealing ring, each projection on the inner casing engaging a respective one of the sockets on the sealing ring.

The mounting arrangement may comprise an annular radially extending slot on the inner casing, a radially inner end of the sealing ring locating in the radially extending slot, the sealing ring having at least one radially extending slot, the inner casing having at least one axially extending pin, the at least one pin locating in the at least one radially extending slot.

The sealing ring may have a plurality of circumferentially spaced radially extending slots, the inner casing having a plurality of axially extending pins, each pin locating in a respective one of the radially extending slots.

The axially extending flange may be shorter than the axially extending slot, the downstream end of the radially inner annular wall structure having a bearing surface and the upstream end of the sealing ring having a cooperating bearing surface.

The bearing surface at the downstream end of the radially inner annular wall structure may be arranged radially inwardly of the axially extending flange.

The sealing ring may be S shaped in cross-section, the S shaped sealing ring having a radially inwardly extending flange.

The S shaped sealing ring may comprise a radially inner axially extending member, a radially outer axially extending member and a middle axially extending member located radially between the radially inner axially extending member and the radially outer axially extending member.

The axially extending slot may be defined between the radially inner axially extending member and the middle axially extending member. A chamber may be formed between the radially outer axially extending member and the middle axially extending member. A plurality of coolant apertures may extend through the radially outer axially extending member. The flapper seal may be secured to the stage of combustion chamber outlet guide vanes and abut the downstream end of the radially outer axially extending member. The w shaped seal may be secured to the middle axially extending member and abut the stage of combustion chamber outlet guide vanes. The ω shaped seal may abut a downstream end of the radially outer axially extending member. The ω shaped seal may have a plurality of impingement coolant apertures extending there-through to direct coolant onto the radially outer axially extending member. The ω shaped seal may have a plurality of impingement coolant apertures extending there-through to direct coolant onto the stage of combustion chamber outlet guide vanes. The C shaped seal may be secured to a downstream end of the radially outer axially extending member and abut the stage of combustion chamber outlet guide vanes.

The sealing ring may be U shaped in cross-section, the U shaped sealing ring having a radially inwardly extending flange.

The U shaped sealing ring may comprise a radially inner axially extending member and a radially outer axially extending member.

The axially extending slot may be defined between the radially inner axially extending member and the radially outer axially extending member. The radially outer axially extending member may have a plurality of axially spaced radially outwardly extending flanges. The flapper seal may be secured to the downstream end of the radially outer axially extending member and abut the stage of combustion chamber outlet guide vanes. The flapper seal may be secured to a radially outwardly extending flange.

There may be a third seal being arranged between the downstream end of the radially inner annular wall structure and the radially inner end of the stage of combustion chamber outlet guide vanes, the third seal being arranged to allow relative axial movement between the sealing ring and the stage of combustion chamber outlet guide vanes.

The sealing ring may be L shaped in cross-section, the L shaped sealing ring having a radially inwardly extending flange.

The annular upstream end wall structure may comprise an annular upstream end wall and a plurality of heat shields positioned downstream of and supported by the annular upstream end wall.

The radially outer annular wall structure may comprise an annular wall and a plurality of tiles arranged radially within and supported by the annular wall. There may be one or more rows of circumferentially arranged tiles.

The radially outer annular wall structure may comprise a plurality of circumferentially arranged wall segments. Each segment may comprise a box structure having a radially inner wall and a radially outer wall.

The radially inner annular wall structure may comprise an annular wall and a plurality of tiles arranged radially around and supported by the annular wall. There may be one or more rows of circumferentially arranged tiles.

The radially inner annular wall structure may comprise a plurality of circumferentially arranged wall segments. Each segment may comprise a box structure having a radially inner wall and a radially outer wall.

The radially outer annular wall structure may be mounted on the outer casing. The radially inner annular wall structure may not be mounted on the inner casing. An upstream end or a downstream end of the radially outer annular wall structure may be mounted on the outer casing. The upstream end of the radially outer annular wall structure may be mounted on the outer casing by at least one radially extending pin. The upstream end of the radially outer annular wall structure may be mounted on the outer casing by a plurality of circumferentially arranged radially extending pins. The downstream end of the radially outer annular wall structure may be mounted on the outer casing by at least one radially extending pin. The downstream end of the radially outer annular wall structure may be mounted on the outer casing by a plurality of circumferentially arranged radially extending pins. The downstream end of the radially outer annular wall structure may be mounted on the outer casing by an annular member secured to the outer casing.

The combustion chamber may be a gas turbine engine combustion chamber.

The gas turbine engine may be an industrial gas turbine engine, an automotive gas turbine engine, a marine gas turbine engine or an aero gas turbine engine.

The aero gas turbine engine may be a turbofan gas turbine engine, a geared turbofan gas turbine engine, a turbojet gas turbine engine, a turbo-propeller gas turbine engine or a turbo-shaft gas turbine engine.

The skilled person will appreciate that except where mutually exclusive, a feature described in relation to any one of the above aspects of the invention may be applied mutatis mutandis to any other aspect of the invention.

Embodiments of the invention will now be described by way of example only, with reference to the Figures, in which:
Figure 1 is a sectional side view of a gas turbine engine having a combustion chamber arrangement according to the present disclosure.
Figure 2 is an enlarged cross-sectional view through a combustion chamber arrangement according to the present disclosure.
Figure 3 is a further enlarged cross-sectional view of figure 2 showing the downstream end of a combustion chamber, a sealing ring, an inner casing and an array of turbine nozzle guide vanes according to the present disclosure.
Figure 4 is a further enlarged cross-sectional of figure 2 showing an alternative arrangement of the downstream end of a combustion chamber, a sealing ring, an inner casing and an array of turbine nozzle guide vanes according to the present disclosure.
Figure 5 is a further enlarged cross-sectional of figure 2 showing another arrangement of the downstream end of a combustion chamber, a sealing ring, an inner casing and an array of turbine nozzle guide vanes according to the present disclosure.
Figure 6 is a further enlarged cross-sectional of figure 2 showing an additional arrangement of the downstream end of a combustion chamber, a sealing ring, an inner casing and an array of turbine nozzle guide vanes according to the present disclosure.
Figure 7 is a further enlarged cross-sectional of figure 2 showing a further arrangement of the downstream end of a combustion chamber, a sealing ring, an inner casing and an array of turbine nozzle guide vanes according to the present disclosure.
Figure 8 is view in the direction of arrow A in figure 3.
Figure 9 is an alternative view in the direction of arrow A in figure 3.
Figure 10 is a further enlarged cross-sectional of figure 2 showing a further arrangement of the downstream end of a combustion chamber, a sealing ring, an inner casing and an array of turbine nozzle guide vanes according to the present disclosure.
Figure 11 is a perspective view of a socket of the inner casing shown in figure 10.
Figure 12 is a further enlarged cross-sectional of figure 2 showing another arrangement of the downstream end of a combustion chamber, a sealing ring, an inner casing and an array of turbine nozzle guide vanes according to the present disclosure.
Figure 13 is a further enlarged cross-sectional of figure 2 showing another arrangement of the downstream end of a combustion chamber, a sealing ring, an inner casing and an array of turbine nozzle guide vanes according to the present disclosure.
Figure 14 is a further enlarged cross-sectional of figure 2 showing another arrangement of the downstream end of a combustion chamber, a sealing ring, an inner casing and an array of turbine nozzle guide vanes according to the present disclosure.

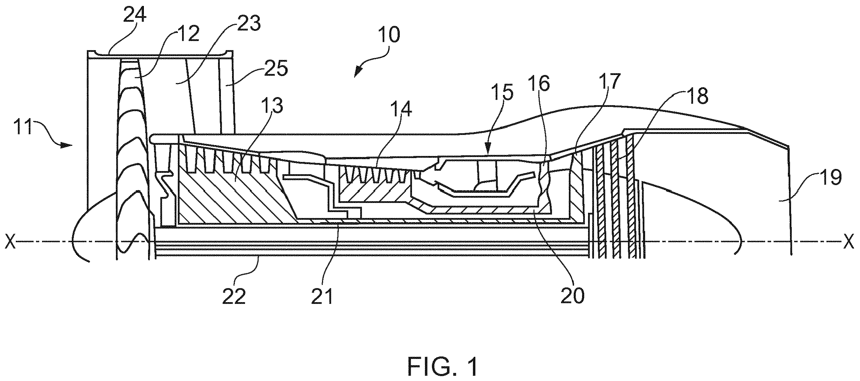

With reference to figure 1, a gas turbine engine is generally indicated at 10, having a principal and rotational axis X-X. The engine 10 comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and an exhaust nozzle 19. A fan nacelle 24 generally surrounds the fan 12 and defines the intake 11 and a fan duct 23. The fan nacelle 24 is secured to the core engine by fan outlet guide vanes 25.

The gas turbine engine 10 works in the conventional manner so that air entering the intake 11 is compressed by the fan 12 to produce two air flows: a first air flow into the intermediate pressure compressor 13 and a second air flow which passes through the bypass duct 23 to provide propulsive thrust. The intermediate pressure compressor 13 compresses the air flow directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high 16, intermediate 17 and low 18 pressure turbines drive respectively the high pressure compressor 14, the intermediate pressure compressor 13 and the fan 12, each by suitable interconnecting shaft 20, 21 and 22 respectively.

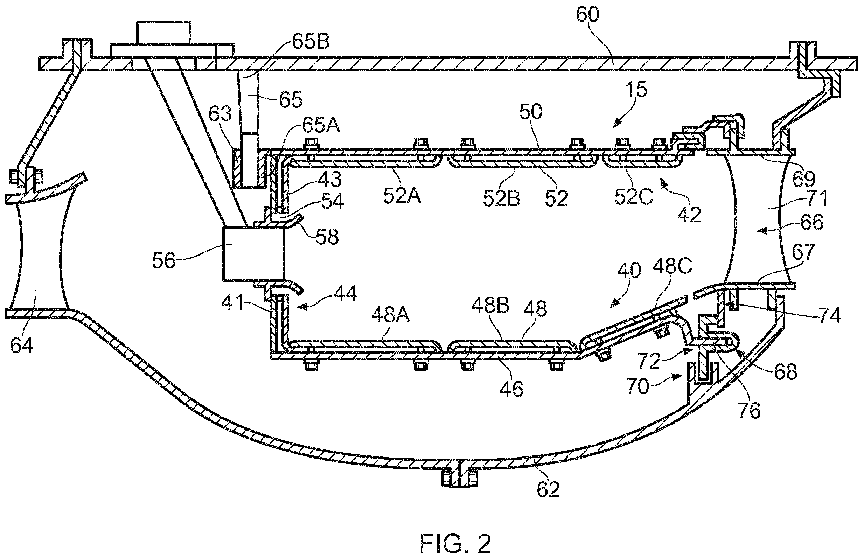

The combustion chamber 15, as shown more clearly in figure 2, is an annular combustion chamber and comprises a radially inner annular wall structure 40, a radially outer annular wall structure 42 and an upstream end wall structure 44. The radially inner annular wall structure 40 comprises a first annular wall 46 and a second annular wall 48. The radially outer annular wall structure 42 comprises a third annular wall 50 and a fourth annular wall 52. The second annular wall 48 is spaced radially from and is arranged radially around the first annular wall 46 and the first annular wall 46 supports the second annular wall 48. The fourth annular wall 52 is spaced radially from and is arranged radially within the third annular wall 50 and the third annular wall 50 supports the fourth annular wall 52. The upstream end wall structure 44 comprises an upstream end wall 41 and a plurality of heat shields 43. The heat shields 43 are spaced axially from and are arranged axially downstream of the upstream end wall 41 and the upstream end wall 41 supports the heat shields 43. The upstream end of the first annular wall 46 is secured to the upstream end wall 41 of the upstream end wall structure 44 and the upstream end of the third annular wall 50 is secured to the upstream end wall 41 of the upstream end wall structure 44.

The upstream end wall structure 44 has a plurality of circumferentially spaced apertures 54 and each aperture 54 extends through the upstream end wall 41 and a respective one of the heat shield 43. The combustion chamber 15 also comprises a plurality of fuel injectors 56 and a plurality of seals 58. Each fuel injector 56 is arranged in a corresponding one of the apertures 54 in the upstream end wall structure 44 and each seal 58 is arranged in a corresponding one of the apertures 54 in the upstream end wall structure 44 and each seal 58 is arranged around, e.g. surrounds, the corresponding one of the fuel injectors 56. The fuel injectors 56 are arranged to supply fuel into the annular combustion chamber 15 during operation of the gas turbine engine 10.

The second annular wall 48 comprises a plurality of rows of combustion chamber tiles 48A, 48B and 48C and the fourth annular wall 52 comprises a plurality of rows of combustion chamber tiles 52A, 52B and 52C. Each row of tiles 48A, 48B, 48C, 52A, 52B and 52C comprises a plurality of tiles arranged circumferentially side by side. The combustion chamber tiles 48A, 48B and 48C are secured onto the first annular wall 46 by threaded studs, washers and nuts and the combustion chamber tiles 52A, 52B and 52C are secured onto the third annular wall 50 by threaded studs, washers and nuts. The heat shields 43 are secured onto the upstream end wall 41 by threaded studs, washers and nuts. The heat shields 43 are arranged circumferentially side by side in a row.

An outer casing 60 surrounds, is arranged radially around or radially outside, the annular combustion chamber 15 and the annular combustion chamber 15 surrounds, is arranged radially around or radially outside, an inner casing 62. A stage of compressor outlet guide vanes 64 is arranged at the downstream end of the high pressure compressor 14 and the stage of compressor outlet guide vanes 64 interconnects the outer casing 60 and the inner casing 62. A stage of combustion chamber outlet guide vanes, also known as high pressure turbine inlet guide vanes, 66 is arranged at the downstream end of the annular combustion chamber 15 and upstream of the high pressure turbine 16 and the stage of combustion chamber outlet guide vanes 66 interconnects the outer casing 60 and the inner casing 62. The stage of combustion chamber outlet guide vanes 66 comprises a plurality of circumferentially spaced aerofoils 71 each of which extends radially between a radially inner platform 67 and a radially outer platform 69.

The annular combustion chamber 15 is mounted on the outer casing 60 by one or more circumferentially spaced mounting pins 65, each mounting pin 65 has a radially inner end 65A which locates in an aperture 63 in a respective structure 61 mounted on the upstream end, e.g. the upstream end wall 41, of the annular combustion chamber 15 and each mounting pin 65 has a radially outer end 65B which is secured to the outer casing 60. Alternatively, the annular combustion chamber may be mounted on the outer casing by one or more circumferentially spaced mounting pins, each mounting pin has a radially inner end which locates in an aperture in a respective structure mounted on the downstream end, e.g. the downstream end of the third annular wall, of the annular combustion chamber and each mounting pin has a radially outer end which is secured to the outer casing (not shown). In a further alternative, the annular combustion chamber may be mounted on the outer casing by an annular mounting member.

The radially inner end of the annular mounting member is secured to the downstream end, e.g. the downstream end of the third annular wall, of the annular combustion chamber and the radially outer end of the annular mounting member is secured to the outer casing, e.g. the annular mounting member has a flange which trapped between two flanges of the outer casing, (not shown). The annular mounting member may have a U-shaped portion.

A sealing ring 68 is mounted on the inner casing 62 by a mounting arrangement 70. The mounting arrangement 70 is configured to allow relative radial movement between the sealing ring 68 and the inner casing 62 and the mounting arrangement 70 is configured to restrict relative axial and circumferential movement between the sealing ring 68 and the inner casing 62. The downstream end of the radially inner annular wall structure 40 forms a first seal 72 with the sealing ring 68 and a second seal 74 is arranged between the sealing ring 68 and the radially inner end of the stage of combustion chamber outlet guide vanes 66. The first seal 72 is arranged to allow relative axial movement between the sealing ring 68 and the annular combustion chamber 15. The second seal 74 is arranged to allow relative axial movement between the sealing ring 68 and the stage of combustion chamber outlet guide vanes 66.

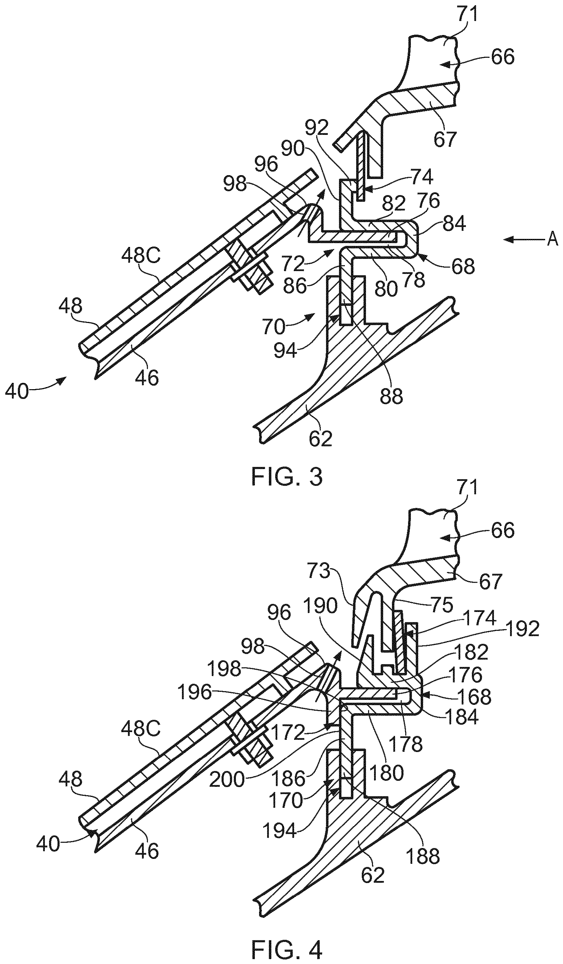

The downstream end of the radially inner annular wall structure 40 has an axially extending flange 76, the sealing ring 68 has an axially extending slot 78 and the axially extending flange 76 of the radially inner annular wall structure 40 locates in the axially extending slot 78 of the sealing ring 68, as shown more clearly in figure 3. In this particular example the downstream end of the first annular wall 46 of the radially inner annular wall structure 40 has the axially extending flange 76 and the axially extending flange 76 of the first annular wall 46 of the radially inner annular wall structure 40 locates in the axially extending slot 78 of the sealing ring 68. The axially extending flange 76 and the axially extending slot 78 together form the first seal 72. The second seal 74 comprises a flapper seal. The flapper seal comprises a plurality of flaps, the flaps are arranged circumferentially side by side, the flaps extend generally radially and the radially outer end of each flap is secured to the radially inner platforms 67 of the combustion chamber outlet guide vanes 66 and the radially inner end of each flap is adjacent the sealing ring 68. The axially extending flange 76 is annular and the axially extending slot 78 is annular.

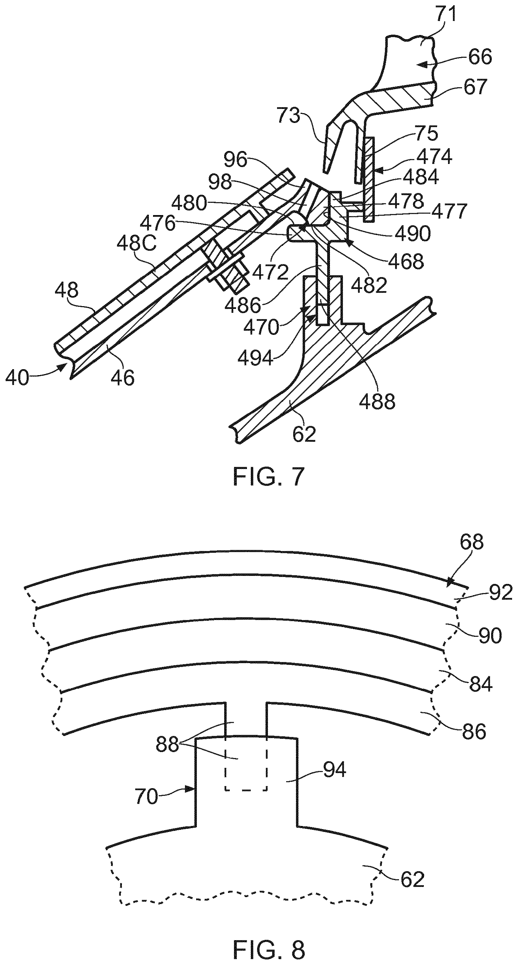

The sealing ring 68 is generally U shaped in cross-section and the sealing ring 68 comprises a radially inner axially extending member, or limb, 80 and a radially outer axially extending member, or limb, 82 and the limbs 80 and 82 of the sealing ring 68 extend generally axially, are radially spaced apart and are parallel to each other and the axially extending slot 78 is defined between the radially inner axially extending member, or limb, 80 and the radially outer axially extending member, or limb, 82. The limbs 80 and 82 of the sealing ring 68 are connected at their downstream ends by a radial connecting portion 84 and the axially extending slot 78 has an open end at the upstream ends of the limbs 80 and 82. The sealing ring 68 has a radially inwardly extending flange 86 and a plurality of circumferentially spaced radially inwardly extending projections, spigots or tangs, 88 on the radially inner end of the sealing ring 68, as shown in figure 8. The sealing ring 68 has a radially outwardly extending flange 90 and the flange 90 has an axially extending annular lip 92 on its downstream face. In this example the flanges 86 and 90 are aligned axially in the same plane perpendicular to the axis X-X and are arranged at the upstream ends of the limbs 80 and 82. However, the flanges 86 and 90 may be arranged in axially spaced planes perpendicular to the axis X-X, such that one of the flanges may be at the 86 or 90 may be at an upstream end of a limb 80 or 82 respectively or both flanges 86 and 90 may be spaced from the upstream ends of the limbs 80 and 82. The radially inner ends of the flaps of the flapper seal 74 are in sliding contact with the axially extending lip 92 of the sealing ring 68.

A plurality of circumferentially spaced sockets 94 are provided on the inner casing 62 and each radially inwardly extending projection 88 on the sealing ring 68 engages a respective one of the sockets 94 on the inner casing 62. The sealing ring 68 is mounted on the inner casing 62 by the mounting arrangement 70 and the mounting arrangement 70 comprises the radially inwardly extending projections 88 on the sealing ring 68 and the sockets 94 on the inner casing 62. The sockets 94 on the inner casing 62 allow the radially inwardly extending projections 88 and hence the sealing ring 68 to move radially relative to the inner casing 62 and yet restrict relative axial and circumferential movement between the radially inwardly extending projections 88 and hence the sealing ring 68 and the inner casing 62.

It is to be noted that the first annular wall 46 of the radially inner annular wall structure 40 has an obtuse bend 96 upstream of the axially extending flange 76 and a row of cooling apertures 98 are provided in the bend to direct coolant in a radially outwardly and axially downstream direction towards and then over the radially inner platforms 67 of the combustion chamber outlet guide vanes 66. The axially extending flange 76 is the same length, or longer, than the axially extending slot 78. The lengths of the axially extending flange 76 and the axially extending slot 78 are selected to enable sufficient relative axial movement of the annular combustion chamber 15 and the sealing ring 68.

In operation, the axially extending flange 76 and the axially extending slot 78 together form the first seal 72 by restricting the flow of coolant through the axially extending slot 78 in a tortuous path between the axially extending flange 76 and the radially inner axially extending member, limb, 80 and then between the axially extending flange 76 and the radially outer axially extending member, or limb, 82 or on the contrary by restricting the flow of gases through the axially extending slot 78 in a tortuous path between axially extending flange 76 and the radially outer axially extending member, or limb, 82 and then between the axially extending flange 76 and the radially inner axially extending member, limb, 80. In operation the flaps of the flapper seal 74 are pressed into contact against the axially extending annular lip 92 on the sealing ring 68 by the pressure differential across the flapper seal 74. The axially extending flange 76 at the downstream end of the radially inner annular wall structure 40 and the axially extending slot 78 in the sealing ring 68 allow the annular combustion chamber 15 and the sealing ring 68 to move axially relative to each other.

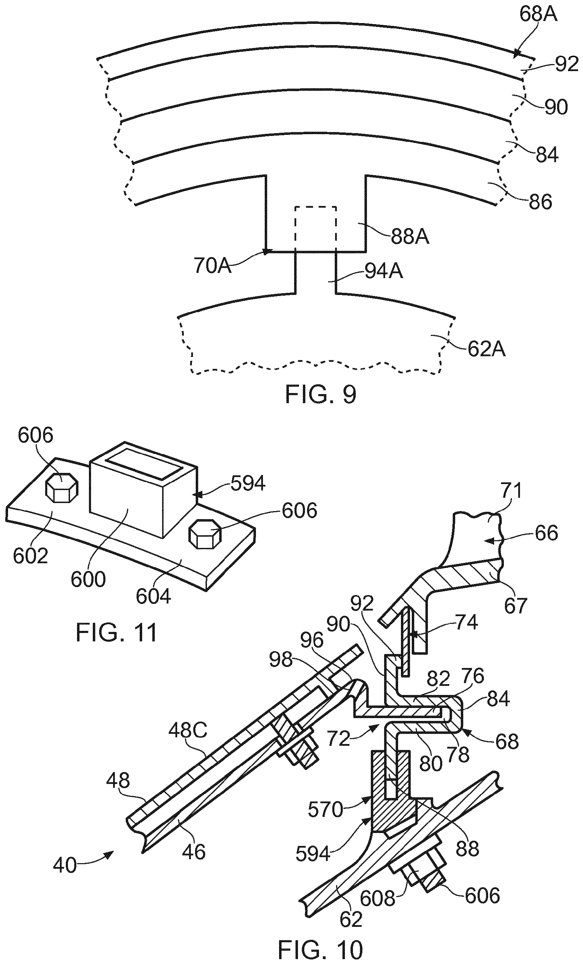

Figure 9 shows an alternative view in the direction of arrow A in figure 3 showing an alternative mounting arrangement 70A which comprises a plurality of circumferentially spaced radially outwardly extending projections 94A on the inner casing 62A and a plurality of circumferentially spaced sockets 88A on the sealing ring 68A. Each radially outwardly extending projection 88A on the inner casing 62A engages a respective one of the sockets 88A on the sealing ring 68A and hence this arrangement works in a similar manner to that described with reference to figure 8.

An alternative sealing ring 168 is mounted on the inner casing 62 by a mounting arrangement 170, as shown in figure 4. The mounting arrangement 170 is configured to allow relative radial movement between the sealing ring 168 and the inner casing 62 and the mounting arrangement 170 is configured to restrict relative axial and circumferential movement between the sealing ring 168 and the inner casing 62. The downstream end of the radially inner annular wall structure 40 forms a first seal 172 with the sealing ring 168 and a second seal 174 is arranged between the sealing ring 168 and the radially inner end of the stage of combustion chamber outlet guide vanes 66. The first seal 172 is arranged to allow relative axial movement between the sealing ring 168 and the annular combustion chamber 15. The second seal 174 is arranged to allow relative axial movement between the sealing ring 168 and the stage of combustion chamber outlet guide vanes 66.

The downstream end of the radially inner annular wall structure 40 has an axially extending flange 176, the sealing ring 168 has an axially extending slot 178 and the axially extending flange 176 of the radially inner annular wall structure 40 locates in the axially extending slot 178 of the sealing ring 168, as shown clearly in figure 4. In this particular example the downstream end of the first annular wall 46 of the radially inner annular wall structure 40 has the axially extending flange 176 and the axially extending flange 176 of the first annular wall 46 of the radially inner annular wall structure 40 locates in the axially extending slot 178 of the sealing ring 168. The axially extending flange 176 and the axially extending slot 178 together form the first seal 172. The second seal 174 comprises a flapper seal. The flapper seal also comprises a plurality of flaps, the flaps are arranged circumferentially side by side, the flaps extend generally radially and the radially inner end of each flap is secured to the sealing ring 168 and the radially outer end of each flap is adjacent the radially inner platforms 67 of the combustion chamber outlet guide vanes 66. The axially extending flange 176 is annular and the axially extending slot 178 is annular.

The sealing ring 168 is again generally U shaped in cross-section and the sealing ring 168 comprises a radially inner axially extending member, or limb, 180 and a radially outer axially extending member, or limb, 182 and the limbs 180 and 182 of the sealing ring 168 extend generally axially, are radially spaced apart and are parallel to each other and the axially extending slot 178 is defined between the radially inner axially extending member, or limb, 180 and the radially outer axially extending member, or limb, 182. The limbs 180 and 182 of the sealing ring 168 are connected at their downstream ends by a radial connecting portion 184 and the axially extending slot 178 has an open end at the upstream ends of the limbs 180 and 182. The sealing ring 168 has a radially inwardly extending flange 186 and a plurality of circumferentially spaced radially inwardly extending projections, spigots or tangs, 188 on the radially inner end of the sealing ring 168, similar to that shown in figure 8. The sealing ring 168 has a plurality of axially spaced radially outwardly extending flanges 190 and 192. The radially outwardly extending flanges 190 and 192 cooperate, interdigitate, with axially spaced radially inwardly extending flanges 73 and 75 on the radially inner platforms 67 of the stage of combustion chamber outlet guide vanes 66. The flapper seal 174 is secured to a radially outwardly extending flange 190 or 192 of the sealing ring 168 and the radially outer ends of the flaps of the flapper seal 174 are adjacent the radially inwardly extending flanges 73 or 75 of the stage of combustion chamber outlet guide vanes 66. In this example the flapper seal 174 is secured to the radially outwardly extending flange 192 of the sealing ring 168 and the radially outer ends of the flaps of the flapper seal 174 are adjacent to, and in sliding contact with, the radially inwardly extending flanges 75 of the stage of combustion chamber outlet guide vanes 66.

A plurality of circumferentially spaced sockets 194 are provided on the inner casing 62 and each radially inwardly extending projection 188 on the sealing ring 168 engages a respective one of the sockets 194 on the inner casing 62. The sealing ring 168 is mounted on the inner casing 62 by the mounting arrangement 170 and the mounting arrangement 170 comprises the radially inwardly extending projections 188 on the sealing ring 168 and the sockets 194 on the inner casing 62. The sockets 194 on the inner casing 62 allow the radially inwardly extending projections 188 and hence the sealing ring 168 to move radially relative to the inner casing 62 and yet restrict relative axial and circumferential movement between the radially inwardly extending projections 188 and hence the sealing ring 168 and the inner casing 62.

It is to be noted that the first annular wall 46 of the radially inner annular wall structure 40 has an obtuse bend 96 upstream of the axially extending flange 176 and a row of cooling apertures 98 are provided in the bend to direct coolant in a radially outwardly and axially downstream direction towards and then over the radially inner platforms 67 of the combustion chamber outlet guide vanes 66. The axially extending flange 176 is shorter than the axially extending slot 178. The lengths of the axially extending flange 176 and the axially extending slot 178 are again selected to enable sufficient relative axial movement of the annular combustion chamber 15 and the sealing ring 168.

The axially extending flange 176 extends from a radially inwardly extending flange 196 at the downstream end of the radially inner annular wall structure 40 and in this particular example the axially extending flange 176 extends from a radially inwardly extending flange 196 at the downstream end of the first annular wall 46 of the radially inner annular wall structure 40. The radially inwardly extending flange 196 radially overlaps the upstream end of the limb 180 and the radially inwardly extending flange 186 of the sealing ring 168, e.g. the inner diameter of the radially inwardly extending flange 196 is less than the outer diameter of the radially inwardly extending flange 186. The inner diameter of the radially inwardly extending flange 196 is less than inner diameter of the limb 180. The radially inwardly extending flange 196 at the downstream end of the radially inner annular wall structure 40 has an annular downstream facing bearing surface 198 and the radially inwardly extending flange 186 of the sealing ring 168 has an annular upstream facing bearing surface 200. The downstream end of the radially inner annular wall structure 40 and the sealing ring 168 may be arranged such that as built there is an axial gap between the annular downstream facing bearing surface 198 of the radially inwardly extending flange 186 and the annular upstream facing bearing surface 200 of the sealing ring 168. Alternatively, the downstream end of the radially inner annular wall structure 40 and the sealing ring 168 may be arranged such that as built there is not an axial gap between the annular downstream facing bearing surface 198 of the radially inwardly extending flange 186 and the annular upstream facing bearing surface 200 of the sealing ring 168. The bearing surface 198 and/or the bearing surface 200 may be provided with a hard, or wear resistant, coating.

In operation, the axially extending flange 176 and the axially extending slot 178 together form the first seal 172 by restricting the flow of coolant through the axially extending slot 178 in a tortuous path between the axially extending flange 176 and the radially inner axially extending member, limb, 180 and then between the axially extending flange 176 and the radially outer axially extending member, or limb, 182 or on the contrary by restricting the flow of gases through the axially extending slot 178 in a tortuous path between axially extending flange 176 and the radially outer axially extending member, or limb, 182 and then between the axially extending flange 176 and the radially inner axially extending member, limb, 180. In addition in operation the axial downstream movement of the annular combustion chamber 15 relative to the sealing ring 168 results in the annular downstream facing bearing surface 198 moving into contact with the annular upstream facing bearing surface 200, if initially there was an axial gap, to transmit axial loads from the annular combustion chamber 15 to the sealing ring 168 and also to provide an improved seal. Furthermore, at higher power conditions increasing axial downstream loads on the annular combustion chamber 15 results in transmission of greater loads from the annular combustion chamber 15 to the sealing ring 168 through the contact between the annular downstream facing bearing surface 198 and the annular upstream facing bearing surface 200 and better sealing is provided between the annular downstream facing bearing surface 198 and the annular upstream facing bearing surface 200. At lower power conditions the axial upstream movement of the annular combustion chamber 15 relative to the sealing ring 168 results in the annular downstream facing bearing surface 198 moving out contact with the annular upstream facing bearing surface 200, but a seal is still provided by the axially extending flange 176 and the axially extending slot 178.

In operation the flaps of the flapper seal 174 are pressed into contact against the radially inwardly extending flanges 75 on the radially inner platforms 67 of the stage of combustion chamber outlet guide vanes 66 by the pressure differential across the flapper seal 174. The axially extending flange 176 at the downstream end of the radially inner annular wall structure 40 and the axially extending slot 178 in the sealing ring 168 allow the annular combustion chamber 15 and the sealing ring 168 to move axially relative to each other. The radially outwardly extending flanges 190 and 192 cooperate, interdigitate, with the axially spaced radially inwardly extending flanges 73 and 75 on the radially inner platforms 67 of the stage of combustion chamber outlet guide vanes 66 to also form a labyrinth seal to restrict the flow of coolant or gases.

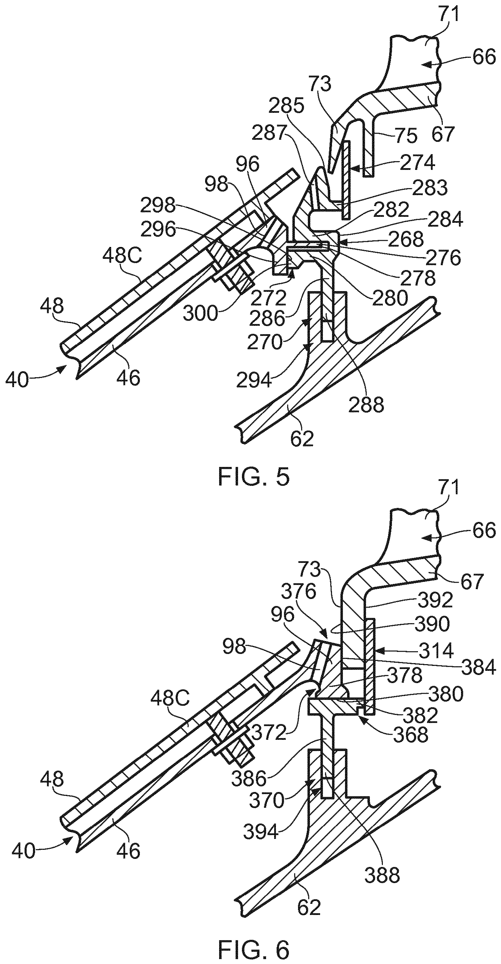

Another sealing ring 268 is mounted on the inner casing 62 by a mounting arrangement 270, as shown in figure 5. The mounting arrangement 270 is configured to allow relative radial movement between the sealing ring 268 and the inner casing 62 and the mounting arrangement 270 is configured to restrict relative axial and circumferential movement between the sealing ring 268 and the inner casing 62. The downstream end of the radially inner annular wall structure 40 forms a first seal 272 with the sealing ring 268 and a second seal 274 is arranged between the sealing ring 268 and the radially inner end of the stage of combustion chamber outlet guide vanes 66. The first seal 272 is arranged to allow relative axial movement between the sealing ring 268 and the annular combustion chamber 15. The second seal 274 is arranged to allow relative axial movement between the sealing ring 268 and the stage of combustion chamber outlet guide vanes 66.

The downstream end of the radially inner annular wall structure 40 has an axially extending flange 276, the sealing ring 268 has an axially extending slot 278 and the axially extending flange 276 of the radially inner annular wall structure 40 locates in the axially extending slot 278 of the sealing ring 168, as shown clearly in figure 5. In this particular example the downstream end of the first annular wall 46 of the radially inner annular wall structure 40 has the axially extending flange 276 and the axially extending flange 276 of the first annular wall 46 of the radially inner annular wall structure 40 locates in the axially extending slot 278 of the sealing ring 268. The axially extending flange 276 and the axially extending slot 278 together form the first seal 272. The second seal 274 comprises a flapper seal. The flapper seal also comprises a plurality of flaps, the flaps are arranged circumferentially side by side, the flaps extend generally radially and the radially inner end of each flap is adjacent the sealing ring 268 and the radially outer end of each flap is secured to the radially inner platforms 67 of the combustion chamber outlet guide vanes 66. The axially extending flange 276 is annular and the axially extending slot 278 is annular.

The sealing ring 268 is generally S shaped in cross-section and the sealing ring 268 comprises a radially inner axially extending member, or limb, 280, a radially outer axially extending member, or limb, 283 and a middle axially extending member, or limb, 282 located radially between the radially inner axially extending member 280 and the radially outer axially extending member 283 and the limbs 280, 282 and 283 of the sealing ring 268 extend generally axially, are radially spaced apart and are parallel to each other and the axially extending slot 278 is defined between the radially inner axially extending member, or limb, 280 and the middle axially extending member, or limb, 282. A chamber 285 is formed between the radially outer axially extending member 283 and the middle axially extending member 282. A plurality of effusion coolant apertures 287 extend through the radially outer axially extending member 283 to supply coolant onto the radially outer surface of the radially outer axially extending member 283 to form a film of coolant and such that the coolant then flows in a radially outwardly and axially downstream direction towards and over the radially inner platforms 67 of the combustion chamber outlet guide vanes 66. The radially inner end of each flap is in sliding contact with the radially outer axially extending member 283.

The limbs 280 and 282 of the sealing ring 268 are connected at their downstream ends by a radial connecting portion 284 and the axially extending slot 278 has an open end at the upstream ends of the limbs 280 and 282. The limbs 282 and 283 of the sealing ring 268 are connected at their upstream ends by a radial connecting portion. The sealing ring 268 has a radially inwardly extending flange 286 and a plurality of circumferentially spaced radially inwardly extending projections, spigots or tangs, 288 on the radially inner end of the sealing ring 268, similar to that shown in figure 8. The flapper seal 274 is adjacent the radially outer axially extending member 283 and is secured to the radially inner platforms 67 of the stage of combustion chamber outlet guide vanes 66. In this example the radially inner ends of the flaps are in sliding contact with the radially outer axially extending member 283 and the radially outer ends of the flaps of the flapper seal 274 are secured to the radially inwardly extending flanges 73 of the stage of combustion chamber outlet guide vanes 66.

A plurality of circumferentially spaced sockets 294 are provided on the inner casing 62 and each radially inwardly extending projection 288 on the sealing ring 268 engages a respective one of the sockets 294 on the inner casing 62. The sealing ring 268 is mounted on the inner casing 62 by the mounting arrangement 270 and the mounting arrangement 270 comprises the radially inwardly extending projections 288 on the sealing ring 268 and the sockets 294 on the inner casing 62. The sockets 294 on the inner casing 62 allow the radially inwardly extending projections 288 and hence the sealing ring 268 to move radially relative to the inner casing 62 and yet restrict relative axial and circumferential movement between the radially inwardly extending projections 288 and hence the sealing ring 268 and the inner casing 62.

It is to be noted that the first annular wall 46 of the radially inner annular wall structure 40 has an obtuse bend 96 upstream of the axially extending flange 276 and a row of effusion cooling apertures 98 are provided in the bend to direct coolant in a radially outwardly and axially downstream direction towards and over the radially outer axially extending member 283 of the sealing ring 268 and then the radially inner platforms 67 of the combustion chamber outlet guide vanes 66. The axially extending flange 276 is shorter than the axially extending slot 278. The lengths of the axially extending flange 276 and the axially extending slot 278 are again selected to enable sufficient relative axial movement of the annular combustion chamber 15 and the sealing ring 268.

The axially extending flange 276 extends from a radially inwardly extending flange 296 at the downstream end of the radially inner annular wall structure 40 and in this particular example the axially extending flange 276 extends from a radially inwardly extending flange 296 at the downstream end of the first annular wall 46 of the radially inner annular wall structure 40. The radially inwardly extending flange 296 radially overlaps the upstream end of the limb 280 and the radially inwardly extending flange 286 of the sealing ring 268, e.g. the inner diameter of the radially inwardly extending flange 296 is less than the outer diameter of the radially inwardly extending flange 286. The inner diameter of the radially inwardly extending flange 296 is less than inner diameter of the limb 280. The radially inwardly extending flange 296 at the downstream end of the radially inner annular wall structure 40 has an annular downstream facing bearing surface 298 and the radially inwardly extending flange 286 of the sealing ring 268 has an annular upstream facing bearing surface 300. The downstream end of the radially inner annular wall structure 40 and the sealing ring 268 may be arranged such that as built there is an axial gap between the annular downstream facing bearing surface 298 of the radially inwardly extending flange 286 and the annular upstream facing bearing surface 300 of the sealing ring 268. Alternatively, the downstream end of the radially inner annular wall structure 40 and the sealing ring 268 may be arranged such that as built there is not an axial gap between the annular downstream facing bearing surface 298 of the radially inwardly extending flange 286 and the annular upstream facing bearing surface 300 of the sealing ring 268. The bearing surface 298 and/or the bearing surface 300 may be provided with a hard, or wear resistant, coating.
In operation, the axially extending flange 276 and the axially extending slot 278 together form the first seal 272 by restricting the flow of coolant through the axially extending slot 278 in a tortuous path between the axially extending flange 276 and the radially inner axially extending member, limb, 280 and then between the axially extending flange 276 and the radially outer axially extending member, or limb, 282 or on the contrary by restricting the flow of gases through the axially extending slot 278 in a tortuous path between axially extending flange 276 and the radially outer axially extending member, or limb, 282 and then between the axially extending flange 276 and the radially inner axially extending member, limb, 280. In addition in operation the axial downstream movement of the annular combustion chamber 15 relative to the sealing ring 268 results in the annular downstream facing bearing surface 298 moving into contact with the annular upstream facing bearing surface 300, if initially there was an axial gap, to transmit axial loads from the annular combustion chamber 15 to the sealing ring 268 and also to provide an improved seal. Furthermore, at higher power conditions increasing axial downstream loads on the annular combustion chamber 15 results in transmission of greater loads from the annular combustion chamber 15 to the sealing ring 268 through the contact between the annular downstream facing bearing surface 298 and the annular upstream facing bearing surface 300 and better sealing is provided between the annular downstream facing bearing surface 298 and the annular upstream facing bearing surface 300. At lower power conditions the axial upstream movement of the annular combustion chamber 15 relative to the sealing ring 268 results in the annular downstream facing bearing surface 298 moving out contact with the annular upstream facing bearing surface 300, but a seal is still provided by the axially extending flange 276 and the axially extending slot 278.

In operation the flaps of the flapper seal 274 are pressed into contact against the radially outer axially extending member 283 of the sealing ring 268 by the pressure differential across the flapper seal 274. The axially extending flange 276 at the downstream end of the radially inner annular wall structure 40 and the axially extending slot 278 in the sealing ring 268 allow the annular combustion chamber 15 and the sealing ring 268 to move axially relative to each other.

An additional sealing ring 368 is mounted on the inner casing 62 by a mounting arrangement 370, as shown in figure 6. The mounting arrangement 370 is configured to allow relative radial movement between the sealing ring 368 and the inner casing 62 and the mounting arrangement 370 is configured to restrict relative axial and circumferential movement between the sealing ring 368 and the inner casing 62. The downstream end of the radially inner annular wall structure 40 forms a first seal 372 with the sealing ring 368, a second seal 374 is arranged between the sealing ring 368 and the radially inner end of the stage of combustion chamber outlet guide vanes 66 and a third seal 376 is arranged between the downstream end of the radially inner annular wall structure 40 and the radially inner end of the stage of combustion chamber outlet guide vanes 66. The first seal 372 is arranged to allow relative axial movement between the sealing ring 368 and the annular combustion chamber 15. The second seal 374 is arranged to allow relative axial movement between the sealing ring 368 and the stage of combustion chamber outlet guide vanes 66. The third seal is arranged to allow relative axial movement between the annular combustion chamber 15 and the stage of combustion chamber outlet guide vanes 66.

A radially inwardly extending flange 378 is provided at the downstream end of the radially inner annular wall structure 40 and in this particular example the radially inwardly extending flange 378 is provided at the downstream end of the first annular wall 46 of the radially inner annular wall structure 40. The radially inwardly extending flange 378 at the downstream end of the radially inner annular wall structure 40 has an annular radially inwardly facing bearing surface, a cylindrical bearing surface, 380 and the sealing ring 368 has an annular radially outwardly facing bearing surface, a cylindrical bearing surface, 382. The cylindrical bearing surfaces 380 and 382 of the radially inwardly extending flange 378 at the downstream end of the radially inner annular wall structure 40 and the sealing ring 368 respectively form the first seal 372. The axial length of the sealing ring 368 and hence the cylindrical bearing surface 380 is selected to accommodate the anticipated axial movement of the annular combustion chamber 15. The bearing surface 380 and/or the bearing surface 382 may be provided with a hard, or wear resistant, coating. The second seal 374 comprises a flapper seal. The flapper seal also comprises a plurality of flaps, the flaps are arranged circumferentially side by side, the flaps extend generally radially and the radially inner end of each flap is adjacent the sealing ring 368 and the radially outer end of each flap is secured to the radially inner platforms 67 of the combustion chamber outlet guide vanes 66. The radially outer ends of the flaps of the flapper seal 374 are in sliding contact with the axially downstream end of the sealing ring 368 and the radially outer ends of the flaps of the flapper seal 374 are secured to the radially inwardly extending flanges 73 of the stage of combustion chamber outlet guide vanes 66. In this example the radially outer ends of the flaps of the flapper seal 374 are adjacent the downstream facing surface 392 radially inwardly extending flanges 73 of the stage of combustion chamber outlet guide vanes 66. The radially inwardly extending flange 378 radially overlaps the radially inwardly extending flanges 73 of the stage of combustion chamber outlet guide vanes 66, e.g. the outer diameter of the radially inwardly extending flange 378 is greater than the inner diameter of the radially inwardly extending flanges 73 of the stage of combustion chamber outlet guide vanes 66. The radially inwardly extending flange 378 at the downstream end of the radially inner annular wall structure 40 has an annular downstream facing bearing surface 384 and the radially inwardly extending flanges 73 of the stage of combustion chamber outlet guide vanes 66 define an annular upstream facing bearing surface 390. The bearing surfaces 384 and 390 of the radially inwardly extending flange 378 at the downstream end of the radially inner annular wall structure 40 and the radially inwardly extending flanges 73 of the stage of combustion chamber outlet guide vanes 66 respectively form the third seal 376.

The sealing ring 368 has a radially inwardly extending flange 386 and a plurality of circumferentially spaced radially inwardly extending projections, spigots or tangs, 388 on the radially inner end of the sealing ring 368, similar to that shown in figure 8. A plurality of circumferentially spaced sockets 394 are provided on the inner casing 62 and each radially inwardly extending projection 388 on the sealing ring 368 engages a respective one of the sockets 294 on the inner casing 62. The sealing ring 368 is mounted on the inner casing 62 by the mounting arrangement 370 and the mounting arrangement 370 comprises the radially inwardly extending projections 388 on the sealing ring 368 and the sockets 394 on the inner casing 62. The sockets 394 on the inner casing 62 allow the radially inwardly extending projections 388 and hence the sealing ring 368 to move radially relative to the inner casing 62 and yet restrict relative axial and circumferential movement between the radially inwardly extending projections 388 and hence the sealing ring 368 and the inner casing 62.

It is to be noted that the first annular wall 46 of the radially inner annular wall structure 40 has an obtuse bend 96 and a row of cooling apertures 98 are provided in the bend to direct coolant in a radially outwardly and axially downstream direction towards and then over the radially inner platforms 67 of the combustion chamber outlet guide vanes 66.

The downstream end of the radially inner annular wall structure 40 and the radially inwardly extending flanges 73 of the stage of combustion chamber outlet guide vanes 66 may be arranged such that as built there is an axial gap between the annular downstream facing bearing surface 384 of the radially inwardly extending flange 378 at the downstream end of the radially inner annular wall structure 40 and the annular upstream facing bearing surface 390 of the radially inwardly extending flange 73 of the stage of combustion chamber outlet guide vanes 66. Alternatively, the downstream end of the radially inner annular wall structure 40 and the radially inwardly extending flanges 73 of the stage of combustion chamber outlet guide vanes 66 may be arranged such that as built there is not an axial gap between the annular downstream facing bearing surface 384 of the radially inwardly extending flange 378 at the downstream end of the radially inner annular wall structure 40 and the annular upstream facing bearing surface 390 of the radially inwardly extending flanges 73 of the stage of combustion chamber outlet guide vanes 66. The bearing surface 384 and/or the bearing surface 390 may be provided with a hard, or wear resistant, coating.

In operation, the cylindrical bearing surfaces 380 and 382 of the radially inwardly extending flange 378 at the downstream end of the radially inner annular wall structure 40 and the sealing ring 368 form the first seal 372. In operation the axial downstream movement of the annular combustion chamber 15 relative to the sealing ring 368 results in the annular downstream facing bearing surface 384 moving into contact with the annular upstream facing bearing surface 390, if initially there was an axial gap, to transmit axial loads from the annular combustion chamber 15 to the stage of combustion chamber outlet guide vanes 66 and also to provide an improved seal. Furthermore, at higher power conditions increasing axial downstream loads on the annular combustion chamber 15 results in transmission of greater loads from the annular combustion chamber 15 to the stage of combustion chamber outlet guide vanes 66 through the contact between the annular downstream facing bearing surface 384 and the annular upstream facing bearing surface 390 and better sealing is provided between the annular downstream facing bearing surface 384 and the annular upstream facing bearing surface 390. At lower power conditions the axial upstream movement of the annular combustion chamber 15 relative to the stage of combustion chamber outlet guide vanes 66 and the sealing ring 368 results in the annular downstream facing bearing surface 384 moving out contact with the annular upstream facing bearing surface 390, but a seal is still provided by the cylindrical bearing surfaces 380 and 382 of the radially inwardly extending flange 378 at the downstream end of the radially inner annular wall structure 40 and the sealing ring 368.

In operation the flaps of the flapper seal 374 are pressed into contact against the axially downstream end of the sealing ring 368 by the pressure differential across the flapper seal 374. The cylindrical bearing surfaces 380 and 382 of the radially inwardly extending flange 378 at the downstream end of the radially inner annular wall structure 40 and the sealing ring 368 allow the annular combustion chamber 15 and the sealing ring 368 to move axially relative to each other. The sealing ring 368 is designed to thermally match the movements of the annular combustion chamber 15 in a radial sense to minimise the interference at the cylindrical bearing surface 380 and thus the load transfer and wear at this interface.

An additional sealing ring 468 is mounted on the inner casing 62 by a mounting arrangement 470, as shown in figure 7. The mounting arrangement 470 is configured to allow relative radial movement between the sealing ring 468 and the inner casing 62 and the mounting arrangement 470 is configured to restrict relative axial and circumferential movement between the sealing ring 468 and the inner casing 62. The downstream end of the radially inner annular wall structure 40 forms a first seal 472 with the sealing ring 468, a second seal 474 is arranged between the sealing ring 468 and the radially inner end of the stage of combustion chamber outlet guide vanes 66. The first seal 472 is arranged to allow relative axial movement between the sealing ring 468 and the annular combustion chamber 15. The second seal 474 is arranged to allow relative axial movement between the sealing ring 468 and the stage of combustion chamber outlet guide vanes 66.

The sealing ring 468 is L shaped in cross-section and comprises an axially extending limb 476 and a radially outwardly extending limb 477. The L shaped sealing ring 468 has a radially inwardly extending flange 486. A radially inwardly extending flange 478 is provided at the downstream end of the radially inner annular wall structure 40 and in this particular example the radially inwardly extending flange 478 is provided at the downstream end of the first annular wall 46 of the radially inner annular wall structure 40. The radially inwardly extending flange 478 at the downstream end of the radially inner annular wall structure 40 has an annular radially inwardly facing bearing surface, a cylindrical bearing surface, 480 and the axially extending limb 476 of the sealing ring 468 has an annular radially outwardly facing bearing surface, a cylindrical bearing surface, 482. The cylindrical bearing surfaces 480 and 482 of the radially inwardly extending flange 478 at the downstream end of the radially inner annular wall structure 40 and the sealing ring 468 respectively form the first seal 472. The axial length of the axially extending limb 476 of the sealing ring 468 and hence the cylindrical bearing surface 480 is selected to accommodate the anticipated axial movement of the annular combustion chamber 15. The bearing surface 480 and/or the bearing surface 482 may be provided with a hard, or wear resistant, coating. The second seal 474 comprises a flapper seal. The flapper seal also comprises a plurality of flaps, the flaps are arranged circumferentially side by side, the flaps extend generally radially and the radially inner end of each flap is adjacent the sealing ring 468 and the radially outer end of each flap is secured to the radially inner platforms 67 of the combustion chamber outlet guide vanes 66. The radially inner ends of the flaps of the flapper seal 474 are in sliding contact with the axially downstream end of the sealing ring 468 and the radially outer ends of the flaps of the flapper seal 474 are secured to the radially inwardly extending flanges 75 of the stage of combustion chamber outlet guide vanes 66.

The radially inwardly extending flange 478 at the downstream end of the radially inner annular wall structure 40 has an annular downstream facing bearing surface 484 and the radially outwardly extending limb 477 of the sealing ring 468 has an annular upstream facing bearing surface 490. The bearing surfaces 484 and 490 of the radially inwardly extending flange 478 at the downstream end of the radially inner annular wall structure 40 and the radially outwardly extending limb 477 of the sealing ring 468 may form a third seal.

The sealing ring 468 has a radially inwardly extending flange 486 and a plurality of circumferentially spaced radially inwardly extending projections, spigots or tangs, 488 on the radially inner end of the sealing ring 468, similar to that shown in figure 8. A plurality of circumferentially spaced sockets 494 are provided on the inner casing 62 and each radially inwardly extending projection 488 on the sealing ring 468 engages a respective one of the sockets 494 on the inner casing 62. The sealing ring 468 is mounted on the inner casing 62 by the mounting arrangement 470 and the mounting arrangement 470 comprises the radially inwardly extending projections 488 on the sealing ring 468 and the sockets 494 on the inner casing 62. The sockets 494 on the inner casing 62 allow the radially inwardly extending projections 488 and hence the sealing ring 468 to move radially relative to the inner casing 62 and yet restrict relative axial and circumferential movement between the radially inwardly extending projections 488 and hence the sealing ring 468 and the inner casing 62.

It is to be noted that the first annular wall 46 of the radially inner annular wall structure 40 has an obtuse bend 96 and a row of cooling apertures 98 are provided in the bend to direct coolant in a radially outwardly and axially downstream direction towards and then over the radially inner platforms 67 of the combustion chamber outlet guide vanes 66.

The downstream end of the radially inner annular wall structure 40 and the sealing ring 468 may be arranged such that as built there is an axial gap between the annular downstream facing bearing surface 484 of the radially inwardly extending flange 478 at the downstream end of the radially inner annular wall structure 40 and the annular upstream facing bearing surface 490 of the radially outwardly extending limb 477 of the sealing ring 468. Alternatively, the downstream end of the radially inner annular wall structure 40 and the radially outwardly extending limb 477 of the sealing ring 468 may be arranged such that as built there is not an axial gap between the annular downstream facing bearing surface 484 of the radially inwardly extending flange 478 at the downstream end of the radially inner annular wall structure 40 and the annular upstream facing bearing surface 490 of the radially outwardly extending limb 477 of the sealing ring 468. The bearing surface 484 and/or the bearing surface 490 may be provided with a hard, or wear resistant, coating.

In operation, the cylindrical bearing surfaces 480 and 482 of the radially inwardly extending flange 478 at the downstream end of the radially inner annular wall structure 40 and the sealing ring 468 form the first seal 372. In operation the axial downstream movement of the annular combustion chamber 15 relative to the sealing ring 468 results in the annular downstream facing bearing surface 484 moving into contact with the annular upstream facing bearing surface 490, if initially there was an axial gap, to transmit axial loads from the annular combustion chamber 15 to the sealing ring 468 and also to provide an improved seal. Furthermore, at higher power conditions increasing axial downstream loads on the annular combustion chamber 15 results in transmission of greater loads from the annular combustion chamber 15 to the sealing ring 468 through the contact between the annular downstream facing bearing surface 484 and the annular upstream facing bearing surface 490 and better sealing is provided between the annular downstream facing bearing surface 484 and the annular upstream facing bearing surface 490. At lower power conditions the axial upstream movement of the annular combustion chamber 15 relative to the sealing ring 468 results in the annular downstream facing bearing surface 484 moving out contact with the annular upstream facing bearing surface 490, but a seal is still provided by the cylindrical bearing surfaces 480 and 482 of the radially inwardly extending flange 478 at the downstream end of the radially inner annular wall structure 40 and the sealing ring 468.

In operation the flaps of the flapper seal 474 are pressed into contact against the sealing ring 468 by the pressure differential across the flapper seal 474. The cylindrical bearing surfaces 480 and 482 of the radially inwardly extending flange 478 at the downstream end of the radially inner annular wall structure 40 and the sealing ring 468 allow the annular combustion chamber 15 and the sealing ring 468 to move axially relative to each other. The sealing ring 468 is designed to thermally match the movements of the annular combustion chamber 15 in a radial sense to minimise the interference at the cylindrical bearing surface 480 and thus the load transfer and wear at this interface.

A further sealing ring is mounted on the inner casing by a mounting arrangement, as shown in figures 10 and 11. The arrangement in figures 10 and 11 is substantially the same as that described with reference to figure 3 and like parts are denoted by like numerals. This arrangement differs in that the mounting arrangement 570 and the sockets 594 are different. The mounting arrangement 570 comprises a plurality of separate sockets 594 which are removably secured to the inner casing 62. Each socket 594, as shown in figure 11, comprises a pocket 600 shaped and dimensioned to receive the radially extending projections 88 of the sealing ring 68 and flanges 602 and 604 extending in circumferentially opposite directions from the pocket 600. The flanges 602 and 604 have apertures (not shown) extending there-through. Each socket 594 is removably secured to the inner casing 62 by bolts 606 inserted through the apertures in the flanges 602 and 604 and aligned corresponding apertures (not shown) in the inner casing 62 and by nuts 608 threaded onto the bolts 606. The mounting arrangement shown in figures 10 and 11 may be used with each of the sealing rings 168, 268, 368 and 468 of figures 4, 5, 6 and 7 respectively. It is to be noted that the inner casing 62 is frustoconical in the region where the sealing ring 68 is mounted onto the inner casing 62. The separate sockets 594 allow axial assembly and disassembly of the sealing ring 68 onto the inner casing 62.

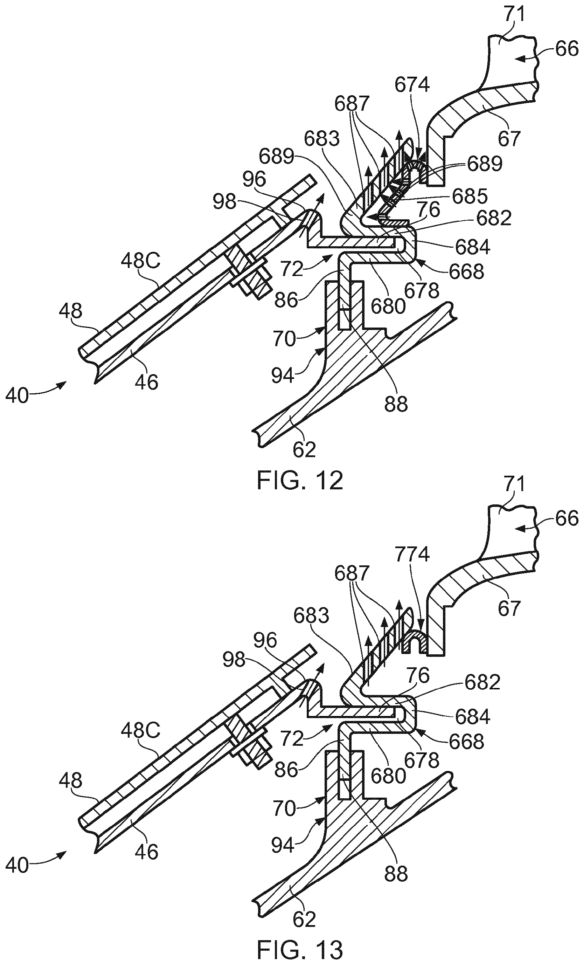

Another sealing ring is mounted on the inner casing by a mounting arrangement, as shown in figure 12. The arrangement in figure 12 is substantially the same as that described with reference to figure 2 and like parts are denoted by like numerals. This arrangement differs in that the sealing ring 668 is generally S shaped in cross-section and the sealing ring 668 comprises a radially inner axially extending member, or limb, 680, a radially outer radially and axially extending member, or limb, 683 and a middle axially extending member, or limb, 682 located radially between the radially inner axially extending member 680 and the radially outer radially and axially extending member 683 and the limbs 680 and 682 of the sealing ring 668 extend generally axially, are radially spaced apart and are parallel to each other and the axially extending slot 678 is defined between the radially inner axially extending member, or limb, 680 and the middle axially extending member, or limb, 682. A chamber 685 is formed between the radially outer axially extending member 683 and the middle axially extending member 682. A plurality of effusion coolant apertures 687 extend through the radially outer radially and axially extending member 683 to supply coolant onto the radially outer surface of the radially outer radially and axially extending member 683 to form a film of coolant and such that the coolant then flows in an axially downstream direction towards and over the radially inner platforms 67 of the combustion chamber outlet guide vanes 66.

The limbs 680 and 682 of the sealing ring 668 are connected at their downstream ends by a radial connecting portion 684 and the axially extending slot 678 has an open end at the upstream ends of the limbs 680 and 682. The limbs 682 and 683 of the sealing ring 668 are directly connected at their upstream ends. The downstream end of the limb 683 is arranged at a greater radius than the upstream end of the limb 683. A generally ω shaped seal 674 extends generally radially and the radially inner end of the ω shaped seal 674 is secured to the middle axially extending member, or limb, 682 and the radially outer end of the ω shaped seal 674 is adjacent and in sliding contact with the radially inwardly extending flanges on the radially inner platforms 67 of the combustion chamber outlet guide vanes 66. The ω shaped seal 674 is also adjacent and in sliding contact with the downstream end of the limb 683 to reduce or prevent leakage of coolant. A hard, or wear, resistant coating may be provided on the downstream end of the limb 683 at the interface with the ω shaped seal 674. The ω shaped seal 674 has a plurality of impingement coolant apertures 689 extending there-through to direct coolant from the chamber 685 onto the limb 683. The ω shaped seal 674 may have a plurality of impingement coolant apertures 689 extending there-through to direct coolant onto the flanges on the radially inner platforms 67 of the combustion chamber outlet guide vanes 66. The ω shaped seal 674 is bonded, brazed, welded to the limb 682 and the ω shaped seal 674 comprises sheet metal. The ω shaped seal 674 may be a one-piece structure or comprise a plurality of circumferentially arranged overlapping sections. The one-piece ω shaped seal 674 may comprise a plurality of axially extending slots to improve compliance and sealing with the combustion chamber outlet guide vanes 66 and the edges of the slots may be arranged so that they are close or overlap to reduce leakage. In another arrangement, not shown, the ω shaped seal 674 and the limb 683 are imperforate. In a further arrangement, not shown, the ω shaped seal 674 is spaced from the downstream end of the limb 683 to allow leakage of coolant and the limb 683 may have apertures extending there-through to provide effusion cooling or may be imperforate.

Another sealing ring is mounted on the inner casing by a mounting arrangement, as shown in figure 13. The arrangement in figure 13 is substantially the same as that described with reference to figure 12 and like parts are denoted by like numerals. This arrangement differs in that it has a C shaped seal 774 and a first end of the C shaped seal 774 is secured to the downstream end of the limb, 683 and the second end of the C shaped seal 774 is adjacent and in sliding contact with the radially inwardly extending flanges on the radially inner platforms 67 of the combustion chamber outlet guide vanes 66. The C shaped seal 774 is bonded, brazed, welded to the limb 683, the C shaped seal 774 comprises sheet metal. The opening in the C shaped seal 774 faces radially inwardly. The C shaped seal 774 may be a one-piece structure or comprise a plurality of circumferentially arranged overlapping sections. The one-piece ω shaped seal 774 may comprise a plurality of axially extending slots to improve compliance and sealing with the combustion chamber outlet guide vanes 66 and the edges of the slots may be arranged so that they are close or overlap to reduce leakage. This arrangement also has a plurality of effusion cooling apertures 687 in the limb 683. In another arrangement, not shown, the C shaped seal may be arranged such that the opening in the C shaped seal faces radially outwardly. Again a first end of the C shaped seal is secured to the downstream end of the limb, 683 and the second end of the C shaped seal is adjacent and in sliding contact with the radially inwardly extending flanges on the radially inner platforms 67 of the combustion chamber outlet guide vanes 66. In this arrangement the C shaped seal may abut the limb 682 of the sealing ring and the limb 683 does not have effusion cooling apertures or the C shaped seal does not abut the limb 682 of the sealing ring and the limb 683 has effusion cooling apertures.

Although the present disclosure has referred to mounting arrangements using radially extending projections on the sealing ring and sockets on the inner casing and visa-versa, it is equally possible to use other mounting arrangements for any of the arrangements shown in figures 3, 4, 5, 6, 7, 10, 12 and 13 which allow the sealing ring to move radially with respect to the inner casing but restrict axial and circumferential movement of the sealing ring relative to the inner casing. In one example each pocket may be defined by two axially spaced members projecting radially outwardly from the inner casing, to define two axially spaced sides of the pocket, between which a radially inwardly extending projection on the sealing ring is locatable and a removable U shaped member which is movable axially, to define two circumferentially spaced sides of the pocket, such that the radially inwardly extending projection is locatable between the circumferentially spaced parallel limbs of the U shaped member. The removable U shaped member is removably secured to the inner casing by fasteners, e.g. by at least one nut and bolt.

In another example each of the radially inwardly extending projections on the sealing ring may have a radial slot starting from the radially inner end of the radially inwardly extending projection and extending axially through the radially inwardly extending projection to divide the radially inwardly extending projection into two circumferentially spaced prongs and the inner casing may have plurality of radially outwardly extending projections each of which is H shaped in cross section and the prongs of each radially inwardly extending projection locate in the recesses between the limbs of the corresponding H shaped cross section projection on the casing. Alternatively, the inner casing may be provided with four radially outwardly extending projections for each radially inwardly extending projection and each prong is located axially between two radially outwardly extending projections and a removable member is movable axially to locate in the radial slot between the two prongs to prevent rotation of the sealing ring. The removable member is removably secured to the inner casing by fasteners, e.g. by at least one nut and bolt.

Although the present disclosure has referred to the second seal comprising a flapper seal, an ω shaped seal, or a C shaped seal it may be equally possible to use other suitable seals for example a labyrinth seal, a brush seal or a combination of a labyrinth seal and a flapper seal. The second seal, e.g. the flapper seal, the ω shaped seal, the C shaped seal or the brush seal, may be secured to the stage of combustion chamber outlet guide vanes or the second seal, e.g. the flapper seal the ω shaped seal, the C shaped seal or the brush seal, may be secured to the sealing ring.

Although the present disclosure has referred to a mounting arrangement comprising a plurality of radially inwardly extending projections on the sealing ring and sockets on the inner casing it may be equally possible for the mounting arrangement to comprise an annular radially extending slot on the inner casing, a radially inner end of the sealing ring locating in the radially extending slot, the sealing ring having at least one radially extending slot, the inner casing having at least one axially extending pin, the at least one pin locating in the at least one radially extending slot. The sealing ring may have a plurality of circumferentially spaced radially extending slots, the inner casing having a plurality of axially extending pins, each pin locating in a respective one of the radially extending slots.

The axially extending flange may be shorter than the axially extending slot, the downstream end of the radially inner annular wall structure having a bearing surface and the upstream end of the sealing ring having a cooperating bearing surface.

The bearing surface at the downstream end of the radially inner annular wall structure may be arranged radially inwardly of the axially extending flange.

Although the present disclosure has been described with reference to the radially outer annular wall structure comprising an annular wall and a plurality of rows of tiles arranged radially within and supported by the annular wall, the radially outer annular wall structure may comprise an annular wall and a single row of combustion chamber tiles which extend substantially the full length of the combustion chamber.

Although the present disclosure has been described with reference to the radially outer annular wall structure comprising an annular wall and a plurality of rows of tiles arranged radially within and supported by the annular wall, the radially outer annular wall structure may simply comprise an annular wall or the radially outer annular wall structure may comprise a plurality of circumferentially arranged wall segments and each segment may comprise a box structure having a radially inner wall and a radially outer wall.

Although the present disclosure has been described with reference to the radially inner annular wall structure comprising an annular wall and a plurality of rows of tiles arranged radially around and supported by the annular wall, the radially inner annular wall structure may comprise an annular wall and a single row of combustion chamber tiles which extend substantially the full length of the combustion chamber.

Although the present disclosure has been described with reference to the radially inner annular wall structure comprising an annular wall and a plurality of tiles arranged radially around and supported by the annular wall, the radially inner annular wall structure may comprise an annular wall or the radially inner annular wall structure may comprise a plurality of circumferentially arranged wall segments and each segment may comprise a box structure having a radially inner wall and a radially outer wall.

An advantage of the present disclosure is that it provides a simple, cheap and durable sealing ring between the downstream end of the radially inner wall structure of the annular combustion chamber and the stage of combustion chamber outlet guide vanes. The present disclosure provides a flapper seal, an ω shaped seal or a C shaped seal, a labyrinth seal, a brush seal or a combination of a labyrinth seal and a flapper seal at the interface between the sealing ring and the stage of combustion chamber outlet guide vanes which eliminates any mechanism, e.g. rolling mechanism of the stage of combustion chamber outlet guide vanes, for transferring loads from the stage of combustion chamber outlet guide vanes to the sealing ring to deform or damage the axially extending slot in the sealing ring. The flapper seal, ω shaped seal, C shaped seal, labyrinth seal, brush seal or a combination of labyrinth seal and flapper seal between the sealing ring and the stage of combustion chamber outlet guide vanes provides a more effective seal than tangs on the stage of combustion chamber outlet guide vanes locating in a radial slot in a sealing ring. The present disclosure has an axially extending slot in the sealing ring and an axially extending flange on the downstream end of the radially inner annular wall structure of the annular combustion chamber permitting relative axial movement between the sealing ring and the radially inner annular wall structure of the annular combustion chamber to reduce or eliminate stresses there-between.

The combustion chamber may be a gas turbine engine combustion chamber.

The gas turbine engine may be an industrial gas turbine engine, an automotive gas turbine engine, a marine gas turbine engine or an aero gas turbine engine.

The aero gas turbine engine may be a turbofan gas turbine engine, a turbojet gas turbine engine, a turbo-propeller gas turbine engine or a turbo-shaft gas turbine engine. The turbofan gas turbine engine may have a gearbox arranged to drive a fan and/or a compressor. The turbo-propeller gas turbine engine may have a gearbox arranged to drive a fan and/or a compressor.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A combustion chamber arrangement comprising an annular combustion chamber (15), an inner casing (62), an outer casing (60) and a stage of combustion chamber outlet guide vanes (66),
the outer casing (60) surrounding the annular combustion chamber (15), the annular combustion chamber (15) surrounding the inner casing (62), the stage of combustion chamber outlet guide vanes (66) being arranged at the downstream end of the annular combustion chamber (15), the stage of combustion chamber outlet guide vanes (66) interconnecting the outer casing (60) and the inner casing (62),
the annular combustion chamber (15) comprising an annular upstream end wall structure (44), a radially inner annular wall structure (40) secured to the annular upstream end wall structure (44) and a radially outer annular wall structure (42) secured to the annular upstream end wall structure (44),
a sealing ring (68) being mounted on the inner casing (62) by a mounting arrangement (70), the mounting arrangement (70) being configured to allow relative radial movement between the sealing ring (68) and the inner casing (62) and the mounting arrangement (70) being configured to restrict relative axial and circumferential movement between the sealing ring (68) and the inner casing (62),
the downstream end of the radially inner annular wall structure (40) forming a first seal (72) with the sealing ring (68), the first seal (72) being arranged to allow relative axial movement between the sealing ring (68) and the annular combustion chamber (15), and
a second seal (74) being arranged between the sealing ring (68) and the radially inner end of the stage of combustion chamber outlet guide vanes (66), the second seal (74) being arranged to allow relative axial movement between the sealing ring (68) and the stage of combustion chamber outlet guide vanes (66).

2. A combustion chamber arrangement as claimed in claim 1 wherein the downstream end of the radially inner annular wall structure (40) having an axially extending flange (76), the sealing ring (68) having an axially extending slot (78) and the axially extending flange (76) of the radially inner annular wall structure (40) locating in the axially extending slot (78) of the sealing ring (68).

3. A combustion chamber arrangement as claimed in claim 1 wherein the downstream end of the radially inner annular wall structure having an axially extending slot, the sealing ring having an axially extending flange and the axially extending flange of the sealing ring locating in the axially extending slot of the radially inner annular wall structure.

4. A combustion chamber arrangement as claimed in claim 1, claim 2 or claim 3 wherein the second seal comprises a flapper seal (74, 174, 274), a labyrinth seal (73, 75, 190, 192), a ω shaped seal (674), a C shaped seal (774) or a labyrinth seal (73, 75, 190, 192) and a flapper seal (174).

5. A combustion chamber arrangement as claimed in any of claims 1 to 4 wherein the mounting arrangement (70) comprises a plurality of circumferentially spaced radially inwardly extending projections (88) on the sealing ring (68) and a plurality of circumferentially spaced sockets (94) on the inner casing (62), each projection (88) on the sealing ring (68) engaging a respective one of the sockets (94) on the inner casing (62).

6. A combustion chamber arrangement as claimed in any of claims 1 to 4 wherein the mounting arrangement (70A) comprises a plurality of circumferentially spaced radially outwardly extending projections (94A) on the inner casing (62A) and a plurality of circumferentially spaced sockets (88A) on the sealing ring (68), each projection (94A) on the inner casing (62A) engaging a respective one of the sockets (88A) on the sealing ring (68A).

7. A combustion chamber arrangement as claimed in any of claims 1 to 4 wherein the mounting arrangement comprises an annular radially extending slot on the inner casing, a radially inner end of the sealing ring locating in the radially extending slot, the sealing ring having at least one radially extending slot, the inner casing having at least one axially extending pin, the at least one pin locating in the at least one radially extending slot.

8. A combustion chamber arrangement as claimed in claim 7 wherein the sealing ring has a plurality of circumferentially spaced radially extending slots, the inner casing having a plurality of axially extending pins, each pin locating in a respective one of the radially extending slots.

9. A combustion chamber arrangement as claimed in any of claims 1 to 8 wherein the axially extending flange (176, 276) is shorter than the axially extending slot (178, 278), the downstream end of the radially inner annular wall structure (40) having a bearing surface (198, 298) and the upstream end of the sealing ring (168, 268) having a cooperating bearing surface (200, 300).

10. A combustion chamber arrangement as claimed in claim 9 wherein the bearing surface (198, 298) at the downstream end of the radially inner annular wall structure (40) is arranged radially inwardly of the axially extending flange (176, 276).

11. A combustion chamber arrangement as claimed in any of claims 1 to 10 wherein the sealing ring (268, 668) is S shaped in cross-section, the S shaped sealing ring (268, 668) having a radially inwardly extending flange (286, 86), the S shaped sealing ring (268, 668) comprises a radially inner axially extending member (280, 680), a radially outer axially extending member (282, 682) and a middle axially extending member (283, 683) located radially between the radially inner axially extending member (280, 680) and the radially outer axially extending member (282, 682), an axially extending slot (278, 678) is defined between the radially inner axially extending member (280, 680) and the middle axially extending member(283, 683), a chamber (285, 685) is formed between the radially outer axially extending member (282, 682) and the middle axially extending member (283, 683).

12. A combustion chamber arrangement as claimed in claim 11 wherein a plurality of coolant apertures (287, 687) extend through the radially outer axially extending member (283, 683).

13. A combustion chamber arrangement as claimed in claim 11 or claim 12 wherein a flapper seal (274) is secured to the stage of combustion chamber outlet guide vanes (66) and abuts the downstream end of the radially outer axially extending member (283).

14. A combustion chamber arrangement as claimed in any of claims 1 to 10 wherein the sealing ring (68, 168) is U shaped in cross-section, the U shaped sealing ring (68, 168) having a radially inwardly extending flange (86, 186), the U shaped sealing ring (68, 168) comprises a radially inner axially extending member (80, 180) and a radially outer axially extending member (82, 182), an axially extending slot (78, 178) is defined between the radially inner axially extending member (80, 180) and the radially outer axially extending member (82, 182).

15. A combustion chamber arrangement as claimed in claim 14 wherein the radially outer axially extending member (182) has a plurality of axially spaced radially outwardly extending flanges (190, 192).

16. A combustion chamber arrangement as claimed in claim 15 wherein a flapper seal (174) is secured to the downstream end of the radially outer axially extending member (182) and abuts the stage of combustion chamber outlet guide vanes (66).

17. A combustion chamber arrangement as claimed in claim 16 wherein the flapper seal (174) is secured to a radially outwardly extending flange (192).
